# EUROPEAN PATENT SPECIFICATION

(11) **EP 0 396 269 B1**
(45) Date of publication and mention of the grant of the patent: **10.11.1993**
(21) Application number: 90303960.0
(22) Date of filing: 11.04.1990
(51) Int. Cl.: B63B 15/00, B63H 9/10

(54) **Method of constructing tubular spars and apparatus for use in carrying out the method**
Verfahren zur Konstruktion von rohrförmigen Sparren und Vorrichtung zur Durchführung des Verfahrens
Méthode pour construire des espars tubulaires et appareil pour la réalisation de la méthode

(30) Priority: 12.04.1989 GB 8908279
(43) Date of publication of application: 07.11.1990
(73) Proprietor: Howlett, Ian Charles, Beaulieu, Hampshire SO42 7YB (GB)
(72) Inventor: Howlett, Ian Charles, Beaulieu, Hampshire SO42 7YB (GB)
(74) Representative: Lomas, Geoffrey Michael

(56) References cited:
- FR-A- 2 564 416
- US-A- 3 765 360

## Description

This invention relates to a method of constructing tubular spars and particularly, but not exclusively, to a method of constructing tubular spars for use on sailing vessels, such as yachts, and vessels provided with auxiliary sail propulsion.

US-A-3 765 360 and FR-A-2 564 416 disclose different methods of constructing masts for sailing vessels.

US-A-3 765 360 teaches the use of an inner core of cruciform cross-section with foam material disposed in the open regions between the outwardly extending arms of the core, reinforcing wires secured around the foam material, and a resinous covering imbedding the wires and providing a smooth contour.

FR-A-2 564 416 teaches the use of a steel core tube covered with glass or carbon fibre reinforcing material.

Neither reference teaches the method of tubular spar construction disclosed by the present invention, which uses, inter alia, longitudinally spaced formers.

According to the present invention a method of constructing tubular spars, is characterised in that it comprises the steps of placing in a channel section mould a layer or layers of a plastics material to form part of the periphery of the tubular spar, removing side wall portions of the mould, placing on the moulded plastics material in longitudinally spaced apart relationship a plurality of formers, placing over the formers a sheet-like skin, securing the skin to the formers, and then placing in contact with the skin a layer or layers of plastics material to form the remainder of the periphery of the moulded tubular spar.

Preferably the mould has a flat base in cross-section but the base can be of any other desired cross-sectional shape, such as arcuate.

The formers are preferably substantially oval in shape but they may be of any other desired shape.

The formers may be removed after the plastics material has set or hardened or they may be left in situ in the tubular member so as to serve to strengthen the tubular spar.

An embodiment of the invention will now be described, by way of example, with reference to the accompanying drawings, in which:-
Figure 1 is a cross-sectional view through a mould used in carrying out the method of the invention;
Figure 2 is a cross-sectional view of the mould showing a step in the method of the invention;
Figure 3 is a cross-sectional view showing part of the mould removed and formers placed on the partly moulded tubular member; and
Figure 4 is a cross-sectional view of the completely moulded tubular spar still supported on the mould.

The mould is indicated generally at 10 and consists of a base 11 and side walls 12 which define a channel section mould of any desired length. The side walls 12 are detachably secured to the base 11 in any desired manner, such as by screws, and the mould may be formed of wood or any other suitable material. The side walls 12 taper in width and decrease from the base 11 towards their upper end.

The mould 10 is shown as having a flat base in cross-section but the base can have any desired cross-sectional shape, such as an arcuate shape.

The method of constructing a tubular spar for use on sailing vessels or vessels provided with auxiliary sail propulsion, will now be described.

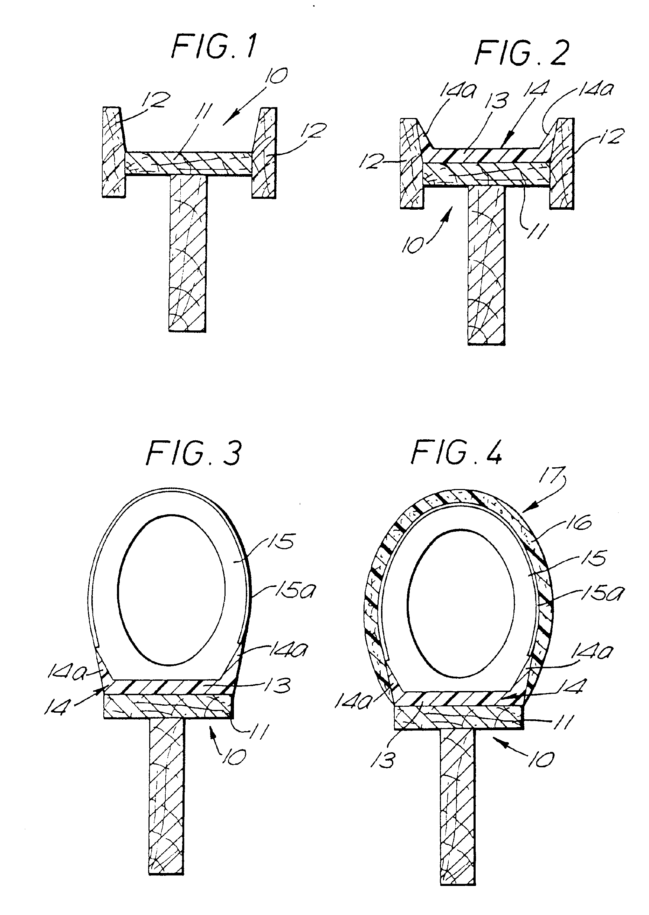

Firstly a layer or layers of fibre reinforced plastics material 13 is placed on the mould 10 to form a part 14 which forms part of the periphery of the tubular spar. The part 14 has at each side a longitudinally extending upstanding side portion 14a which tapers upwardly. When the plastics material 13 has set or hardened the side walls 12 of the mould 10 are removed, as shown in Figure 3, and a plurality of spaced apart formers 15 are placed in an upright position on the moulded part 14.

The formers 15 are shown as having a substantially oval shape in side view, but they may have any other desired shape. The formers 15 may be spaced apart at any desired spacing and they may be formed of plywood or metal or other suitable material.

The formers 15 may be set up on the moulded part 14 before the moulded part 14 has set or hardened and before the side walls 12 have been removed.

The bottom portion of each former 15 fits exactly into the shape of the upper side of the moulded part 14. Placed in contact with the formers 15 is a sheet-like skin 15a which is secured thereto by bonding or other securing means.

After the formers 15 have been set up a layer or layers of fibre reinforced plastics material 16 is placed in contact with the skin 15a secured to the formers 15 to form the remaining remainder portion 17 of the periphery of the moulded tubular member. The connection of portion 17 to the part 14 is achieved by an overlapped or lapped joint with the side portions 14a. The skin 15a supports the material 16.

After the plastics material 16 has set or hardened the formers 15 may be removed. Alternatively, the formers 15 may be left in situ in order to strengthen the moulded tubular member.

The reinforced plastics material 13, 16 may be glass or carbon or aramid fibre reinforced plastics material and the lay-up of the material may be by the wet lay method or by the pre-impregnated method using any of the commercially available resin matrix systems.

## Claims

1. A method of constructing tubular spars, characterised in that it comprises the steps of placing in a channel section mould (10) a layer or layers of a plastics material (13) to form part of the periphery of the tubular spar, removing side wall portions (12) of the mould, placing on the moulded plastics material (13) in longitudinally spaced apart relationship a plurality of formers (15), placing over the formers a sheet-like skin (15a), securing the skin to the formers, and then placing in contact with the skin a layer or layers of plastics material (16) to form the remainder of the periphery of the moulded tubular spar.

2. A method as claimed in Claim 1, in which the formers (15) are removed after the plastics material (16) has set or hardened.

3. A method as claimed in Claim 1, in which the formers (15) are left in situ in the tubular spar to strengthen the tubular spar.

4. A method as claimed in any preceding claim, in which a longitudinally extending upstanding side portion (14) which tapers upwardly is formed at each side of the moulded part formed by the layer or layers of plastics material (13) placed in the mould (10) and the layer or layers (16) which are placed on the skin (15a) overlap the side portions (14).

5. A method as claimed in any preceding claim, in which the plastics material (13, 16) comprises a fibre reinforced plastics material.

6. A method as claimed in any preceding claim, in which the mould (10) has a flat or arcuate base (11).

7. Apparatus for use in carrying out the method claimed in any preceding claim, characterised in that it comprises a channel section mould (10) having removable side walls (12), a plurality of formers (15) which can be placed in longitudinally spaced apart relationship on moulded material (13) when placed in the mould, and a sheet-like skin (15a) which can be placed over the spaced apart formers (10) and secured thereto.

## Patentansprüche

1. Verfahren zur Herstellung rohrförmiger Holme, Spieren, Sparren und dgl.,
**dadurch gekennzeichnet**, daß es die folgenden Schritte aufweist:
Einsetzen einer oder mehrerer Schichten einer Kunststoffmasse (13) in eine Form (10) mit U-förmigem Querschnitt zur Bildung eines Teils des Umfangs der rohrförmigen Spiere,
Entfernen von seitlichen Wandungsabschnitten (12) der Form,
Aufsetzen einer Vielzahl von in Längsrichtung voneinander beabstandeten Formkörpern (15) auf die geformte Kunststoffmasse (13),
Auflegen einer folienartigen Außenhaut (15a) über die Formkörper,
Befestigen der Außenhaut an den Formkörpern, und
anschließende Kontaktierung einer oder mehrerer Schichten aus Kunststoff (16) mit der Aupenhaut zur Bildung des restlichen Teils des Umfangs der geformten rohrförmigen Spiere.

2. Verfahren nach Anspruch 1,
bei welchem die Formkörper (15) nach dem Abbinden bzw. Aushärten des Kunststoffs (16) entfernt werden.

3. Verfahren nach Anspruch 1,
bei welchem die Formkörper (15) in der rohrförmigen Spiere zur Verstärkung derselben an Ort und Stelle belassen werden.

4. Verfahren nach einem der vorhergehenden Ansprüche,
bei welchem ein in Längsrichtung verlaufender und nach oben ragender Seitenabschnitt (14), der sich nach oben zu verjüngt, auf jeder Seite des von der bzw. den in die Form (10) eingebrachten Schicht(en) der Kunststoffmasse (13) gebildeten geformten Teils geformt wird, und die eine bzw. mehreren Schichten (16), die auf die Aupenhaut (15a) aufgebracht werden, die Seitenabschnitte (14) überdecken.

5. Verfahren nach einem der vorhergehenden Ansprüche,
bei welchem die Kunststoffmasse (13, 16) ein faserverstärktes Kunststoffmaterial aufweist.

6. Verfahren nach einem der vorhergehenden Ansprüche,
bei welchem die Form (10) eine flache oder bogenförmige Basis (11) aufweist.

7. Vorrichtung zur Verwendung bei Durchführung des Verfahrens nach einem der vorhergehenden Ansprüche,
**dadurch gekennzeichnet,** daß sie eine Form (10) mit U-förmigem Querschnitt und mit abnehmbaren seitlichen Wandungen (12), eine Vielzahl von Formkörpern (15), die in Längsrichtung voneinander beabstandet auf geformtes Material (13) beim Einsetzen in die Form aufsetzbar sind, und eine folienartige Außenhaut (15a) aufweist, die über die beabstandeten Formkörper (10) auflegbar und daran befestigbar ist.

## Revendications

1. Un procédé de fabrication de poutres et esparres tubulaires, caractérisé en ce qu'il comprend les étapes consistant à plasser dans un moule à section en U (10) une ou plusieurs couches d'une matière plastique (13) pour former une partie de la périphérie de la poutre tubulaire à enlever des parties de paroi latérale (12) du moule, placer sur la matière plastique moulée (13) une pluralité de supports (15) espacés l'un de l'autre dans la direction longitudinale, à placer sur les supports une peau en forme de feuil (15a), à fixer la peau sur les supports, et à placer ensuite une ou plusieurs couches d'une matière plastique (16) en contact avec la peau afin de former le reste de la périphérie de la poutre tubulaire moulée.

2. Un procédé selon la revendication 1, dans lequel on enlève les supports (15) après la prise ou le durcissement de la matière plastique (16).

3. Un procédé selon la revendication 1, dans lequel on laisse les supports (15) en place dans la poutre tubulaire afin de la renforcer.

4. Un procédé selon l'une quelconque des revendications précédentes dans lequel on forme de chaque côté de la partie moulée formée par la ou les couches de matière plastique (13) placées dans le moule (10) une partie latérale montante (14) s'étendant dans la direction longitudinale en s'effilant vers le haut, là ou les couches (16) qui sont placées sur la peau (15a) recouvrant les parties latérales (14).

5. Un procédé selon l'une quelconque des revendications précédentes dans lequel la matière plastique (13, 16) comprend une matière plastique renforcée par des fibres.

6. Un procédé selon l'une quelconque des revendications précédentes dans lequel le moule (10) comporte une base plate ou arquée (11).

7. Un dispositif destiné à être utilisé pour la mise en oeuvre du procédé selon l'une quelconque des revendications précédentes, caractérisé en ce qu'il comporte un moule à section en canal (10) présentant des parois latérales amovibles (12), une pluralité de supports (15) susceptibles d'être placé espacés l'un de l'autre dans la direction longitudinale sur du matériau moulé (13) lorsqu'ils sont placés dans le moule et une peau en forme de feuil (15a) susceptible d'être placée sur les supports espacés (10) et d'être fixée aux supports.
